(19) **Europäisches Patentamt / European Patent Office / Office européen des brevets**

(11) **EP 1 657 546 B1**

(12) **EUROPEAN PATENT SPECIFICATION**

(45) Date of publication and mention
of the grant of the patent:
**09.01.2008 Bulletin 2008/02**

(51) Int Cl.:
**G01N 29/34** *(2006.01)* **G01M 7/08** *(2006.01)*

(21) Application number: **05252098.8**

(22) Date of filing: **04.04.2005**

(54) **Shock waveform synthesis method for shock response spectrum**

Verfahren zur Erzeugung von Stosswellenformen für Stoss- Ansprechspektrum

Méthode de synthétisation de formes d'ondes de choc pour spectre de réponse au choc

(84) Designated Contracting States:
**BE DE FR GB IT**

(30) Priority: **05.11.2004 KR 2004089919**

(43) Date of publication of application:
**17.05.2006 Bulletin 2006/20**

(73) Proprietor: **Agency for Defence Development
Daejeon (KR)**

(72) Inventor: **Yoon, Eul-Jae
Daejeon (KR)**

(74) Representative: **Smith, Norman Ian et al
fJ CLEVELAND
40-43 Chancery Lane
London WC2A 1JQ (GB)**

(56) References cited:
**EP-A- 0 971 217** **US-A- 3 434 060**
**US-A- 3 733 555** **US-A- 5 355 418**
**US-B1- 6 167 758** **US-B1- 6 507 790**

- **PATENT ABSTRACTS OF JAPAN vol. 1999, no. 05, 31 May 1999 (1999-05-31) & JP 11 031944 A (OKI ELECTRIC IND CO LTD), 2 February 1999 (1999-02-02)**

Printed by Jouve, 75001 PARIS (FR)

**Description**

BACKGROUND OF THE INVENTION

1. Field of the Invention

The present invention relates to shock waveform synthesis methods which are used for a shock response spectrum test, and particularly, to shock waveform synthesis methods for a shock response spectrum over a short time interval.

2. Description of the Conventional Art

Shock tests in environmental test are performed to evaluate an influence on a physical or functional performance of a test item to be exposed to shocks in its lifetime. The shock tests may be classified into classical shock tests such as half-sine, sawtooth, or the like specifying types of waveforms, and shock response spectrum tests which do not specify the types of waveforms and can advantageously achieve uniform results therefrom.
A shock spectrum analyzer and synthesizer system is known from US-A-3 733 555.
A shock response spectrum (hereinafter SRS) is a plot of the peak responses of a series of single degree of freedom (hereinafter SDOF) systems to an input transient. Here, the peak response indicates a maximax in the response history. There may theoretically be many types of waveforms satisfying the shock response spectrum which is required for specifications of the shock response spectrum test. The shock response spectrum test uses a shaker.

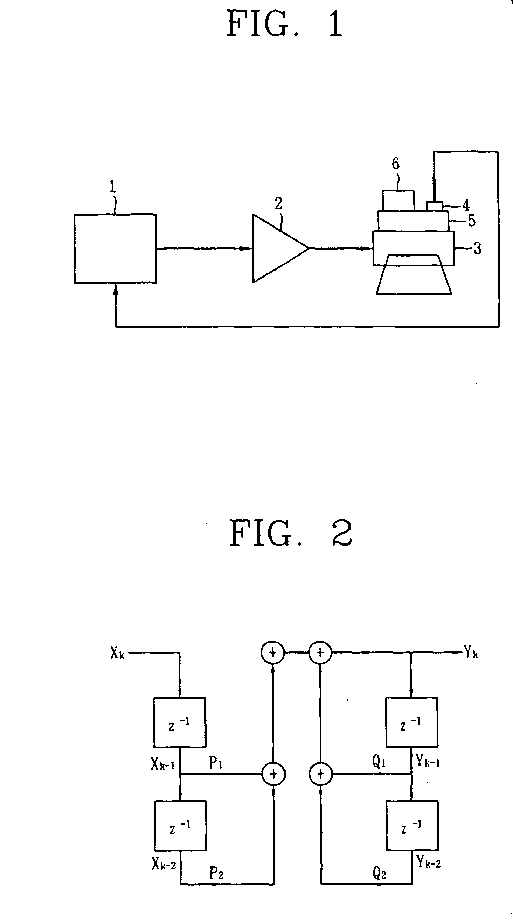

Figure 1 is a schematic view showing a shaker system for performing the shock response spectrum test.
Referring to Figure 1, the shaker system comprises a control system 1 and a power amplifier 2. A fixture 5 is placed between the shaker 3 and a test item 6, and an accelerometer 4 is mounted at a position at which the test item 6 is coupled to the fixture 5.
In general, mechanical shock applied to the test item 6 will cause the test item 6 to respond to (a) forced frequencies imposed on the test item 6 from the excitation, and (b) resonant natural frequencies either during or after application of the excitation. Such response may cause the failure of the test item 6 as a result of increased or decreased friction between parts, or general interference between parts, and etc. There are various types of waveforms satisfying the shock response spectrum given by the shock response spectrum test. However, in MIL-STD-810F (which has been revised from MIL-STD-810E in January, 2000), a new effective shock duration $T_e$ is defined and certain conditions are required. Depending on the certain conditions, the shock response spectrum should be satisfied, the determined effective shock duration should be kept, and some compromise may be necessary on the condition of a waveform which can not satisfy the determined effective shock duration, namely, a waveform of which duration is 20% longer than the effective shock duration. In other word, first, if the test item has no significant low frequency modal response, it is permissible to allow the low frequency portion of the SRS to fall out of tolerance, provided the high frequency portion begins at least one octave below the first natural mode frequency of the test item. In this case, the duration should be satisfied. Secondly, if the test item has significant low frequency modal response, it is permissible to allow the duration of the transient pulse to fall out of tolerance, provided the duration of the transient pulse does not exceed $T_e + \dfrac{1}{2f_{min}}$ (here, $f_{min}$ is the

lowest frequency in the SRS analysis). Moreover, if the duration of the transient pulse must exceed $T_e + \dfrac{1}{2f_{min}}$ in

order to have the low frequency portion of the SRS within tolerance, a new shock procedure must be used. The effective shock duration can be considered as requisite to perform a sufficient test for interference between parts. However, because the conventional waveform synthesis methods have not satisfied the requirements of the determined effective shock duration, namely, because of the waveform which has the duration much longer than the determined effective shock duration, it is disadvantageously impossible to test damage or malfunction which may be caused by the interference between parts.
Furthermore, in the existing method for calculating a shock response history in the single degree of freedom system by using a digital filter algorithm, there is no problem to calculate the shock response history in the single degree of freedom system, provided that a sampling frequency is much greater than the natural frequency to be analyzed. However, its inverse applications to filter off the unwanted transient have been demonstrated not to be feasible because of unstable problems.

Moreover, in the classical shock test for sawtooth or half-sine which have pre-load and post-load pulses, there is no way to easily reduce peak velocities or peak displacements. As a result, it is impossible to perform the test in case of exceeding shaker limits.

SUMMARY OF THE INVENTION

Therefore, an object of the present invention is to provide shock waveform synthesis methods for a shock response spectrum over a short time interval by which interference between parts within a test item is increased to perform a sufficient shock test for damage or malfunction which may be caused by the interference between parts. A unit pulse digital filter may be provided for obtaining a shock response history required for the shock waveform synthesis and a unit pulse digital inverse filter may be provided for filtering off the unwanted transient by inversely using the unit pulse digital filter. Another object is embodied in the present invention, that is to provide shock waveform synthesis methods by which peak velocities or peak displacements are easily reduced with additional conditions, in case that peak velocities or peak displacements of classical shock waveforms in which pre-load and post-load areas are added in the classical shock test exceed shaker limits.

To achieve these and other advantages and in accordance with the purpose of the present invention, as embodied and broadly described herein, the present invention provides waveform synthesis methods for a shock response spectrum over a short time interval which comprise the steps of: (a) obtaining each time $\tau_k$ ($k$ =1,2,$\cdots$, $M$) at which a maximax value is detected in the response history due to a zero delay wavelet input, wherein a natural frequency of the SDOF system with a $Q$ (quality factor) of 10 equals to the wavelet frequency of the zero delay wavelet input; (b) and establishing each delay time $\delta_k$ as $\delta_k = \tau_l$-$\tau_k$ ($k$ =1,2,...,$M$).

A digital filter may be arranged for obtaining a shock response history required for waveform synthesis methods for the shock response spectrum over a short time interval, and there may be coefficients of $P_1$ and $P_2$ in the difference equation of the unit pulse digital filter.

The foregoing and other objects, features, aspects and advantages of the present invention will become more apparent from the following detailed description of the present invention when taken in conjunction with the accompanying drawings.

BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:

Figure 1 is a schematic view showing a shaker system for performing a shock response spectrum test;
Figure 2 is a block diagram showing a digital filter;
Figure 3 shows z-plane pole locations for a unit pulse digital inverse filter;
Figure 4 is a block diagram showing a digital inverse filter ;
Figure 5 shows specifications of test shock response spectra of functional test for flight equipment, functional test for ground equipment and crash hazard test for flight equipment, and crash hazard test for ground equipment;
Figure 6 is a graph showing a shock waveform synthesized according to the present invention in order to perform the functional test for flight equipment;
Figure 7 is a graph showing a shock waveform synthesized according to the present invention in order to perform the functional test for ground equipment and crash hazard test for flight equipment;
Figure 8 is a graph showing a shock waveform synthesized according to the present invention in order to perform the crash hazard test for ground equipment;
Figure 9 shows a Fourier spectrum of a shock waveform synthesized according to the present invention in order to perform the functional test for flight equipment;
Figure 10 shows shock response spectra of Figures 6 to 8;
Figure 11 shows in a domain of natural frequencies the time at which the time limit shock response spectra of Figures 6 to 8 are detected;
Figure 12 shows waveforms synthesized by using the time limit shock response spectrum for the test specifications shown in Figure 5;
Figure 13 shows shock response spectra of the synthesized waveforms shown in Figure 12;
Figure 14 shows ideal sawtooth waveforms for functional test for flight equipment, functional test for ground equipment and crash hazard test for flight equipment, and crash hazard test for ground equipment;
Figure 15 shows shock response spectra of the sawtooth waveforms shown in Figure 14;

Figure 16 shows waveforms synthesized according to the present invention with the shock response spectra shown in Figure 15 for the shock test shown in Figure 14;
Figure 17 shows shock response spectra of the synthesized waveforms shown in Figure 16.

DETAILED DESCRIPTION OF THE PREFERRED EMBODIMENTS

Reference will now be made in detail to the preferred embodiments of the present invention, examples of which are illustrated in the accompanying drawings.
Hereinafter, with reference to Figures 2 through 17, the foregoing will be explained in detail, i.e., a method for synthesizing waveforms for a shock response spectrum over a short time interval by establishing the delay time, number of half cycles, and acceleration amplitude of the wavelet which is a component waveform of a shock waveform, and a unit pulse digital filter for obtaining a shock response history.
The waveform synthesis method according to the present invention comprises the steps of: (a) obtaining each time $\tau_k$ ($k$ =1,2,$\cdots$,$M$) at which a maximax value is detected in the response history due to a zero delay wavelet input, wherein a natural frequency of the SDOF system with a $Q$ of 10 equals to the wavelet frequency of the zero delay wavelet input; (b) and establishing each delay time $\delta_k$ as $\delta_k = \tau_l - \tau_k$ ($k$ = 1,2, ... ,$M$) .
Also, the waveform synthesis method further comprises the steps of establishing the number of half cycles of the wavelet and establishing the acceleration amplitude of the wavelet.
The waveform synthesis method described in detail as follows.
A shock waveform is synthesized by taking wavelets as components. A wavelet refers to half-sine modulated sinusoid with an odd number of half cycles as shown in [Formula 1].

$$g(t) = A_0 \sin\frac{2\pi f_0 t}{N} \sin 2\pi f_0 t , \quad 0 \le t \le \frac{N}{2f_0} \quad \text{---- [Formula 1]}$$

Here, $f_0$ refers to the wavelet frequency (it is actually the center frequency of the wavelet spectrum), $N$ refers to the number of half cycles which is an odd number greater than 1, and $A_0$ refers to the wavelet acceleration amplitude.
First two definite integrals are zero - hence no residual velocity or displacement if wavelet represents an acceleration function.
A shock waveform $x(t)$ for performing a shock response spectrum test can be expressed as a linear combination of wavelets as shown in [Formula 2].

$$x(t) = \sum_{k=1}^{M} g_k(t - \delta_k), \quad ( \text{here}, \quad 0 \le (t - \delta_k) \le \frac{N_k}{2f_k} ) \text{----- [Formula 2]}$$

Here, $g_k(t - \delta_k)$ refers to the $k^{th}$ wavelet which has a delay time $\delta_k$, and $M$ refers to the number of wavelets.
Also, the $g_k(t - \delta_k)$ is represented as shown in [Formula 3].

$$g_k(t - \delta_k) = A_k \sin\frac{2\pi f_k(t - \delta_k)}{N_k} \sin 2\pi f_k(t - \delta_k) \quad \text{----- [Formula 3]}$$

Here, $N_k$ refers to the number of half cycles in the $k^{th}$ wavelet, $A_k$ refers to the wavelet acceleration amplitude in the $k^{th}$ wavelet, and $f_k$ refers to the $k^{th}$ wavelet frequency which is represented as shown in [Formula 4].

$$f_k = 2^n f_{k-1} \quad \text{----- [Formula 4]}$$

Here, $n$ refers to one sixth, namely, six wavelet frequencies for each octave.
The wavelet frequency $f_k$ is calculated as the six wavelet frequencies for every octave from 2,000Hz to about 10Hz in their descending order, and the calculated frequencies are then assigned again in their ascending order.

The wavelet acceleration amplitude $A_k$ is repeatedly calculated in order to obtain the desired shock response spectrum with respect to the $k^{th}$ wavelet, which will be explained in detail in [Formula 8]

The number of the natural frequencies for the shock response spectrum analysis of the shock waveform may be given by six for every octave from 2,000Hz to about 10Hz in a descending order. The given natural frequencies are then arranged in an ascending order. The shock waveform may be analyzed for the shock response spectrum with $Q$ = 10 at a sequence of natural frequencies spaced at an interval of one sixth octave (or one twelfth octave if necessary). The shock response spectrum has several types such as maximax, primary positive, primary negative, residual positive, residual negative or the like. However, test specifications generally accept the maximax, and thus the shock response spectrum hereafter refers to the maximax. Here, the maximax within specified time limits is referred to as a time limit shock response spectrum.

Methods for establishing the delay time, number of half cycles and acceleration amplitude of the wavelet will be explained as follows. First, for each wavelet $k$ (*here, k* = 1,2,···, *M)* , a maximax value is obtained at the time $\tau_k$ in the response history of a SDOF system where a natural frequency of the SDOF system with a $Q$ of 10 equals to the $k^{th}$ wavelet frequency and an input to the SDOF system is the $k^{th}$ wavelet with a delay time $\delta_k$ = 0 , because a maximum value in the SRS due to the $k^{th}$ wavelet input with a delay time $\delta_k$ = 0 is easily found at the natural frequency which equals to the $k^{th}$ wavelet frequency. And then $\tau_1$ in $\tau_k(k=1,2,...,M)$ is the longest, because the numbers of half cycles are established as shown in [Formula 6]. Secondly, the delay time $\delta_k$ of the $k^{th}$ wavelet can be obtained by using [Formula 5]. For each wavelet $k$ , each time $\Gamma_k$ is the same. Here, $\Gamma_k$ is the time at which a maximax value is obtained in the response history of a SDOF system where a natural frequency of the SDOF system equals to the $k^{th}$ wavelet frequency and an input to the SDOF system is the $k^{th}$ wavelet with a delay time $\delta_k$ as shown in [Formula 6].

$$\delta_k = \tau_1 - \tau_k \quad \text{or,} \quad \delta_k = \tau_1 - \tau_k + const. \quad (k = 1,2,\cdots,M) \quad \text{----- [Formula 5]}$$

Here, const. refers to constant.

Also, the numbers of half cycles are established as shown in [Formula 6].

$$N_k = \begin{cases} 5, (\text{when } f_k < 1,000 Hz) \\ 7, (\text{when } f_k \geq 1,000 Hz) \end{cases} \quad \text{---- [Formula 6]}$$

Furthermore, a method for obtaining and establishing the acceleration amplitude $A_k$ of the wavelet will be explained hereafter. An initial acceleration amplitude of each wavelet is given by -1 as shown in [Formula 7]. Here, the shock waveform synthesized by $A_k^1 = -1$ has an opposite direction to the waveform synthesized by $A_k^1 = 1$.

$$A_k^1 = -1 \quad (k = 1,2,\cdots,M) \quad \text{----[Formula 7]}.$$

In the $i^{th}$ shock waveform synthesis, the acceleration amplitude $A_k^i$ of the $k^{th}$ wavelet is obtained by iterating [Formula 8].

$$A_k^{i+1} = \frac{R_k}{S_k^i} A_k^i \quad \text{or} \quad A_k^{i+1} = \frac{R_k}{C_k^i} A_k^i \quad \text{----[Formula 8]}$$

Here, $R_k$ refers to a shock response spectrum required from the test specification, i.e., the peak response of a series of SDOF systems (each with the $k^{th}$ natural frequency), $S_k^i$ refers to a shock response spectrum of *the $i^{th}$*

synthesized shock waveform, and $C_k^i$ refers to a time limit shock response spectrum representing the shock response spectrum detected within specified time limits. Here, $Q = 10$, and the sequence of natural frequencies have an one sixth octave interval in the range of 10Hz to 2,000Hz or of 20Hz to 2,000Hz. Here, $Q$ is referred to as a quality factor value, namely, so-called transmissibility at resonance.

The shock waveform for the shock response spectrum over a short time interval can be obtained from the linear combination of wavelets where the parameters of wavelets such as delay time, number of half cycles and acceleration amplitude are established.

Hereinafter, a method will be explained in order to provide a unit pulse digital filter for calculating the shock response histories and the shock response spectra which are used for synthesizing waveforms.

The unit pulse digital filter can be easily embodied from the view of those skilled arts by using its difference equation, and thus a method for obtaining the difference equation of the unit pulse digital filter will be explained hereafter.

Consider that the input to the SDOF is the base acceleration and that the response of the system is the absolute acceleration of the mass, then the transfer function of this system in the complex Laplace domain is given by [Formula 9].

$$H(s) = \frac{Y(s)}{X(s)} = \frac{2\zeta W_n s + W_n^2}{s^2 + 2\zeta W_n s + W_n^2} = \frac{2cs + W_n^2}{s^2 + 2cs + W_n^2} \qquad \text{-----[Formula 9]}$$

Here, $W_n = 2\pi f_n$, $\zeta = \dfrac{1}{2Q}$, $c = \zeta W_n$, $f_n$ is the natural frequency and $Q$ is a quality factor value.

By taking the difference between two step functions, an unit pulse is formed of unit amplitude from $t = 0$ to $t = T$ as given by [Formula 10] where $T$ is the sampling period and x(t) represents the input acceleration. The z-transform of $x(t)$ is given by [Formula 11] and the Laplace transform of x(t) is given by [Formula 12]. Also, the Laplace transform of $y(t)$ is given by [Formula 13] where $y(t)$ represents the output acceleration. The inverse Laplace transform of $Y(s)$ is expressed as [Formula 14], and the z-transform $Y(z)$ is expressed as [Formula 15].

$$L^{-1}[X(s)] = x(t) = U(t) - U(t - T) \qquad \text{----- [Formula 10]}$$

$$X(z) = \frac{z}{z-1} - \frac{1}{z-1} = 1 \qquad \text{----- [Formula 11]}$$

$$L[x(t)] = X(s) = \frac{1}{s} - e^{-Ts}\frac{1}{s} \qquad \text{----- [Formula 12]}$$

$$L[y(t)] = Y(s) = (\frac{1}{s} - e^{-Ts}\frac{1}{s})\frac{2cs + W_n^2}{s^2 + 2cs + W_n^2}$$

$$= \frac{1}{s} - \frac{(s+c) - \frac{c}{W_d}W_d}{(s+c)^2 + W_d^2} - e^{-Ts}(\frac{1}{s} - \frac{(s+c) - \frac{c}{W_d}W_d}{(s+c)^2 + W_d^2}) \quad \text{------ [Formula 13]}$$

$$y(t) = L^{-1}[Y(s)] = U(t) - e^{-ct}(\cos W_d t - \frac{c}{W_d}\sin W_d t)U(t)$$

$$- [U(t-T) - e^{-c(t-T)}(\cos W_d(t-T) - \frac{c}{W_d}\sin W_d(t-T))U(t-T)]$$

$$= U(t) - U(t-T) - e^{-ct}(\cos W_d t - \frac{c}{W_d}\sin W_d t)U(t)$$

$$+ e^{-c(t-T)}(\cos W_d(t-T) - \frac{c}{W_d}\sin W_d(t-T))U(t-T) \quad \text{---- [Formula 14]}$$

$$Y(z) = 1 - \frac{z^2 - ze^{-cT}(a + \frac{bc}{W_d}) - z + e^{-cT}(a + \frac{bc}{W_d})}{z^2 - 2zae^{-cT} + e^{-2cT}}$$

$$= 1 - \frac{z^2 - z[e^{-cT}(a + \frac{bc}{W_d}) + 1] + e^{-cT}(a + \frac{bc}{W_d})}{z^2 - 2zae^{-cT} + e^{-2cT}}$$

$$= \frac{z[e^{-cT}(a + \frac{bc}{W_d} - 2a) + 1] - e^{-cT}(a + \frac{bc}{W_d} - e^{-cT})}{z^2 - 2zae^{-cT} + e^{-2cT}}$$

$$= \frac{ze^{-cT}(e^{cT} - a + \frac{bc}{W_d}) - e^{-2cT}[(a + \frac{bc}{W_d})e^{cT} - 1]}{z^2 - 2zae^{-cT} + e^{-2cT}} \quad \text{-----[Formula 15]}$$

Here, $W_d = W_n\sqrt{1 - \zeta^2}$, $a = \cos(W_d T)$, and $b = \sin(W_d T)$.

At this time, $P_1$, $P_2$, $Q_1$, and $Q_2$ are written as [Formula 16], provided that the z-transform $Y(z)$ of $y(t)$ is set by

$$Y(z) = \frac{P_1 z + P_2}{z^2 - Q_1 z - Q_2} .$$

$$P_1 = e^{-cT}(e^{cT} - a + \frac{bc}{W_d}) , \quad P_2 = -e^{-2cT}[(a + \frac{bc}{W_d})e^{cT} - 1] , \quad Q_1 = 2ae^{-cT} , \quad Q_2 = -e^{-2cT}$$

--- [Formula 16]

Consider that a discrete data system is described by the difference equation as given by [Formula 17]. Taking the z-transform on both sides of the equation and assuming zero initial conditions yields [Formula 18]. From the equation the transfer function of the system is easily written as [Formula 19]. This system (hereinafter referred to as "unit pulse digital filter") can be realized by the difference equation as given by [Formula 20] where $X_1 = X_2 = 0$, $Y_1 = Y_2 = 0$ and $k \geq 3$.

$$Y_{k+2} - Q_1 Y_{k+1} - Q_2 Y_k = P_1 X_{k+1} + P_2 X_k \quad \text{------ [Formula 17]}$$

$$z^2 Y(z) - Q_1 z Y(z) - Q_2 Y(z) = P_1 z X(z) + P_2 X(z) \quad \text{----- [Formula 18]}$$

$$H(z) = \frac{Y(z)}{X(z)} = \frac{P_1 z + P_2}{z^2 - Q_1 z - Q_2} = \frac{P_1 z^{-1} + P_2 z^{-2}}{1 - Q_1 z^{-1} - Q_2 z^{-2}} \quad \text{----- [Formula 19]}$$

$$Y_k = Q_1 Y_{k-1} + Q_2 Y_{k-2} + P_1 X_{k-1} + P_2 X_{k-2} \quad \text{----- [Formula 20]}$$

Figure 2 shows a block diagram of the unit pulse digital filter,
[0048]    An inverse filter of the unit pulse digital filter (hereinafter referred to as "unit pulse digital inverse filter") which is used in order to filter off the unwanted transient will be obtained as follows.
The transfer function $M_z(z)$ of the unit pulse digital inverse filter is [Formula 21].

$$M_z(z) = \frac{1}{H(z)} = \frac{X(z)}{Y(z)} \quad \text{----- [Formula 21]}$$

Let $X^s(z) = z^{-1}X(z)$ , then $X_k^s = X_{k-1}$ is obtained by right shift in time. So the transfer function of the typical recursive filter will be obtained as [Formula 22]. The difference equation of the unit pulse digital inverse filter is given by [Formula 23].

$$\frac{X^s(z)}{Y(z)} = \frac{z^{-1}X(z)}{Y(z)} = \frac{z^2 - Q_1 z - Q_2}{P_1 z^2 + P_2 z} = \frac{b_0 + b_1 z^{-1} + b_2 z^{-2}}{1 + a_1 z^{-1}} \quad \text{----- [Formula 22]}$$

$$X_k^s = b_0 Y_k + b_1 Y_{k-1} + b_2 Y_{k-2} - a_1 X_{k-1}^s$$

or,

$$X_{k-1} = b_0 Y_k + b_1 Y_{k-1} + b_2 Y_{k-2} - a_1 X_{k-2} \quad \text{----- [Formula 23]}$$

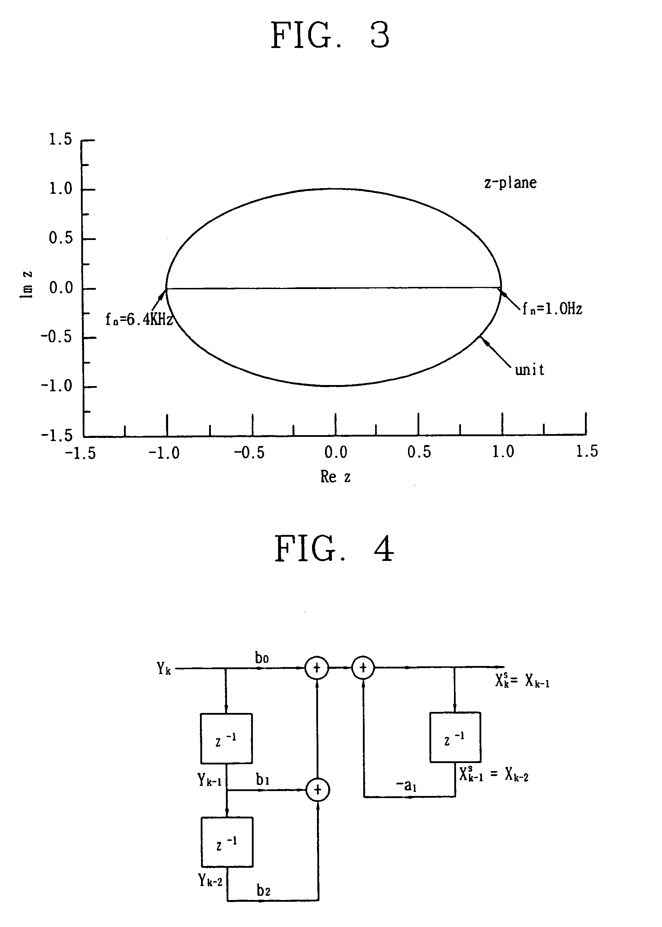

Here, $a_1 = \dfrac{P_2}{P_1}$ , $b_0 = \dfrac{1}{P_1}$ , $b_1 = \dfrac{-Q_1}{P_1}$ , $b_2 = \dfrac{-Q_2}{P_1}$ , and, $3 \le k \le N$, $X_1 = X_2 = X_N = 0$, $Y_1$ = $Y_2$ = 0. At this time, when $|a_1| < 1$, the system may be stable to be embodied. Figure 3 shows z-plane pole locations in order to check whether the system is stable or not.

Figure 3 shows z-plane pole locations for the unit pulse digital inverse filter. Here, pole locations are obtained with the sampling period $T = 7.8125 \times 10^{-5}$ sec in the single degree of freedom systems in which the natural frequency is $1.0 Hz \le f_n \le 6.4 KHz$ at an interval of 1.0Hz and $Q = 10$.

As shown in Figure 3, the unit pulse digital inverse filter is stable, and thus is available to be used for filtering off the unwanted transient.

A block diagram showing a digital inverse filter is displayed in Figure 4.

The unit pulse digital inverse filter is invented to filter off the unwanted transient which is included in the measured data in the circumstances where it is possible to measure only outputs through the structure (e.g., an output through a test stand (structure) is measured from a load cell for evaluating thrust of a rocket motor).

Hereinafter, it will be considered with reference to the accompanying drawings whether the shock waveforms synthesized according to the present invention satisfy specifications of the shock response spectrum test of the functional test for flight equipment, the functional test for ground equipment, the crash hazard test for flight equipment, and the crash hazard test for ground equipment, those which are generally used for the shock test.

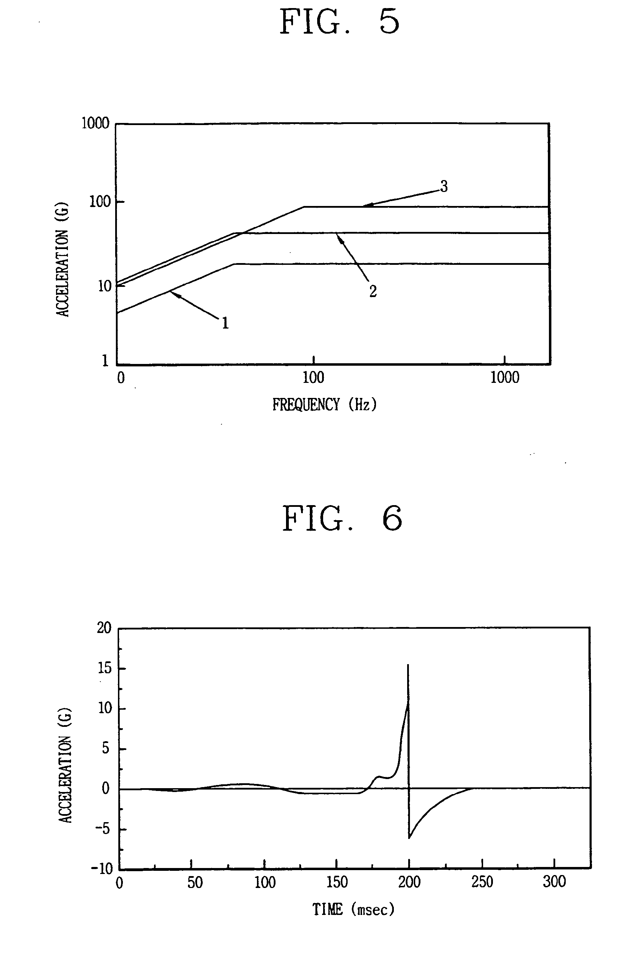

Figure 5 shows specifications of test shock response spectra for ground equipment and flight equipment. Therefore, the shock response spectrum of a certain shock waveform should satisfy a specification shown in Figure 5. In Figure 5, the numeral 1 indicates the specification of the shock response spectrum to be applied for the functional test for flight equipment, the numeral 2 indicates the specification of the shock response spectrum to be applied for the functional test for ground equipment and the crash hazard test for flight equipment, and the numeral 3 indicates the specification of the shock response spectrum to be applied for the crash hazard test for ground equipment. Here, an effective shock duration should satisfy the specified conditions in the test shock time history.

Figure 6 is a graph showing a shock waveform synthesized according to the present invention in order to perform the functional test for flight equipment.

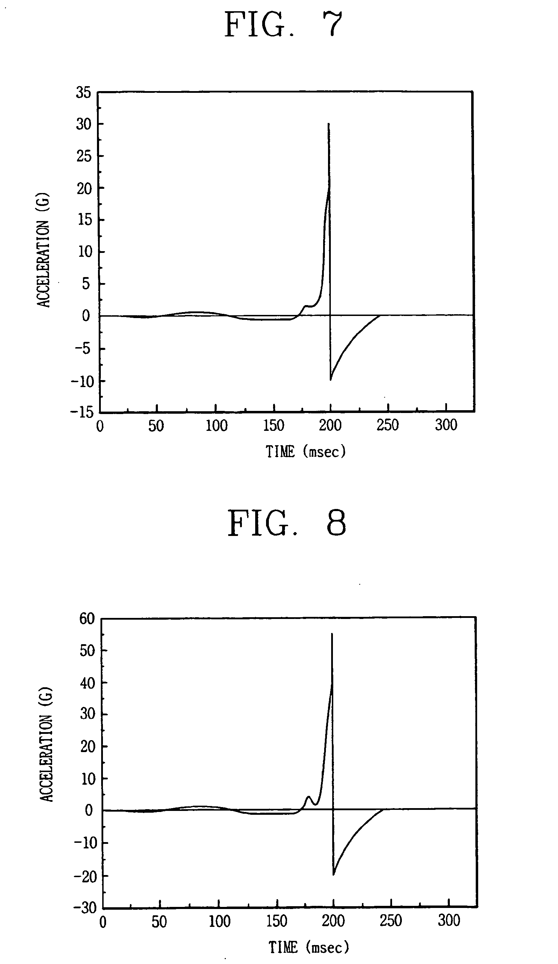

Figure 7 is a graph showing a shock waveform synthesized according to the present invention in order to perform the functional test for ground equipment and the crash hazard test for flight equipment.

Figure 8 is a graph showing a shock waveform synthesized according to the present invention in order to perform the crash hazard test for ground equipment.

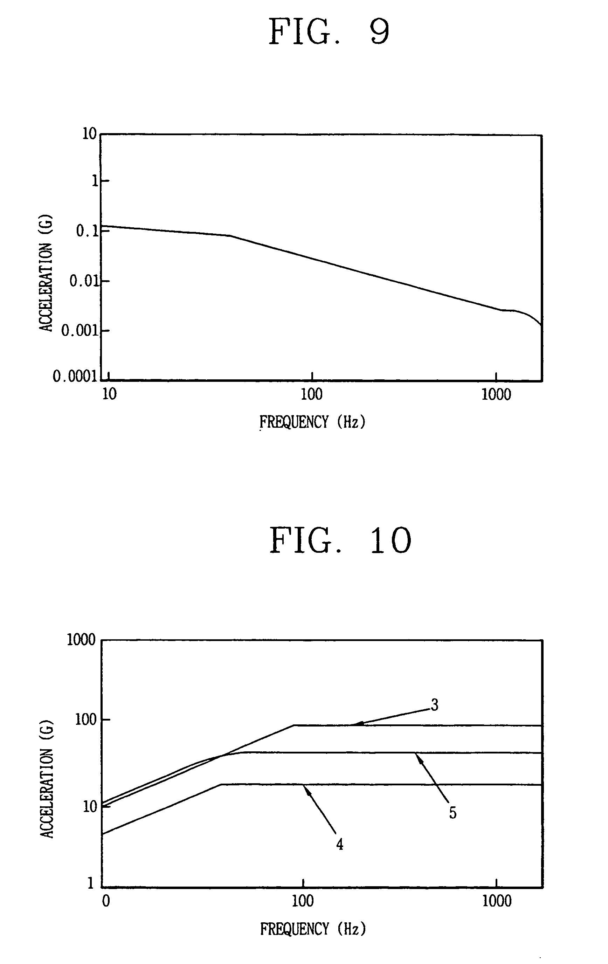

Figure 9 shows a Fourier spectrum of a shock waveform synthesized according to the present invention in order to perform the functional test for flight equipment.

Figure 10 shows shock response spectra of Figures 6 to 8.

Therefore, as shown in Figure 9, the Fourier spectrum of the waveform synthesized according to the present invention is a smooth curve without harsh notches compared with the conventional art, so the quality of the synthesized waveform is superior to that of the conventional synthesized waveform. Also, comparing Figure 5 with Figure 10, since those graphs are approximately equal thereto, it can be noticed that the shock waveform synthesis method for the shock response spectrum over a short time interval satisfies the test specifications.

Furthermore, it will now be expressed whether the synthesis method according to the present invention further increases interference between parts within a test item.

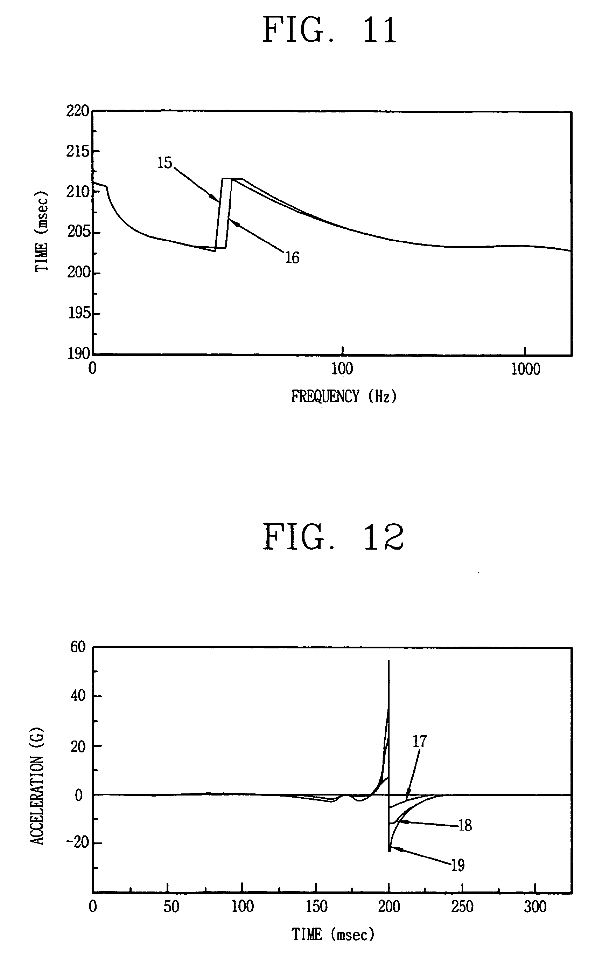

First, the time limit shock response spectra of Figures 6 to 8 are within - 3dB tolerance limit where a time limit shock response spectrum is a plot of maximax responses within 16msec time limits (from 195msec to 211msec) in the shock response time histories. Figure 11 shows in a domain of natural frequencies the time at which the time limit shock response spectra of Figures 6 to 8 are detected where the time limits is 16msec (from 195msec to 211msec). Here, the numeral 15 indicates the time at which the time limit shock response spectra are detected in cases of a waveform (Figure 6) synthesized for the functional test for flight equipment and a waveform (Figure 7) synthesized for the functional test for ground equipment and the crash hazard test for flight equipment, and the numeral 16 indicates the time at which the time limit shock response spectrum is detected in a case of a waveform (Figure 8) synthesized for the crash hazard test for ground equipment.

With reference to Figure 11, since the time at which the time limit shock response spectrum is obtained is between 201msec and 211msec (which means the time difference is 10msec), 10msec time difference is very short so that the interference between parts within the test item may be sufficiently checked, considering that more than -3dB acceleration is between 201 msec and 211 msec in the response history of each SDOF system.

In addition, it will be checked whether the method for obtaining an acceleration amplitude is feasible.

First, similarly, a time limit shock response spectrum is obtained with 16msec time limits (from 195msec to 211msec) in the shock response time histories, and shock waveforms are synthesized to satisfy the test specifications of the shock response spectra shown in Figure 5 by the time limit shock response spectrum. That is, in order to obtain the wavelet acceleration amplitude, the shock waveforms satisfying the test specifications of the shock response spectra shown in Figure 5 are synthesized by using $C_k^i$ during the process of iterating [Formula 8].

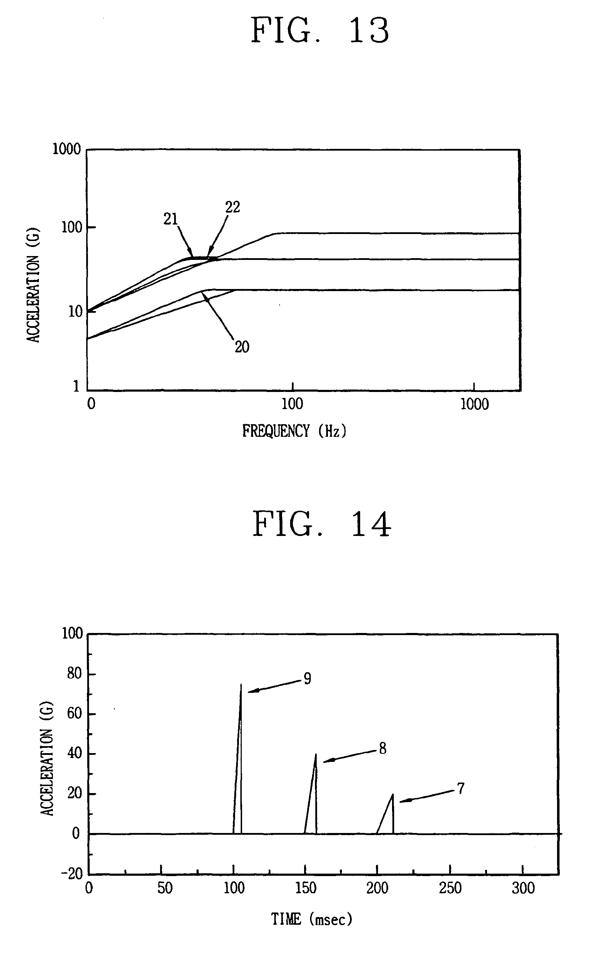

Figures 12 shows the shock waveforms synthesized by using the $C_k^i$ and these waveforms satisfy the specifications for the shock response spectrum test. Figures 13 shows the shock response spectra of the shock waveforms shown in Figures 12.

Figure 12 shows waveforms synthesized by using the time limit shock response spectrum for the test specifications shown in Figure 5.

Figure 13 shows shock response spectra of the synthesized waveforms shown in Figure 12.

Here, the numeral 17 indicates a shock waveform synthesized by using the time limit shock response spectrum for the functional test for flight equipment, the numeral 18 indicates a shock waveform synthesized by using the time limit shock response spectrum for the functional test for ground equipment and the crash hazard test for flight equipment, and the numeral 19 indicates a shock waveform synthesized by using the time limit shock response spectrum for the crash hazard test for ground equipment. Also, the numeral 20 indicates the shock response spectrum of the numeral 17, the numeral 21 indicates the shock response spectrum of the numeral 18, and the numeral 22 indicates the shock response spectrum of the numeral 19.

As can be seen in Figure 13, the shock response spectra are within 3dB tolerance limit. Similarly, considering that the acceleration required from the test specification is between 201msec and 211msec in the response history of each SDOF system, 10msec time difference is very short so as to check the interference between parts within the test item.

Also, it will be explained with reference to the accompanying drawings what effect the synthesis methods according to the present invention can obtain in the classical shock test such as half-sine or sawtooth.

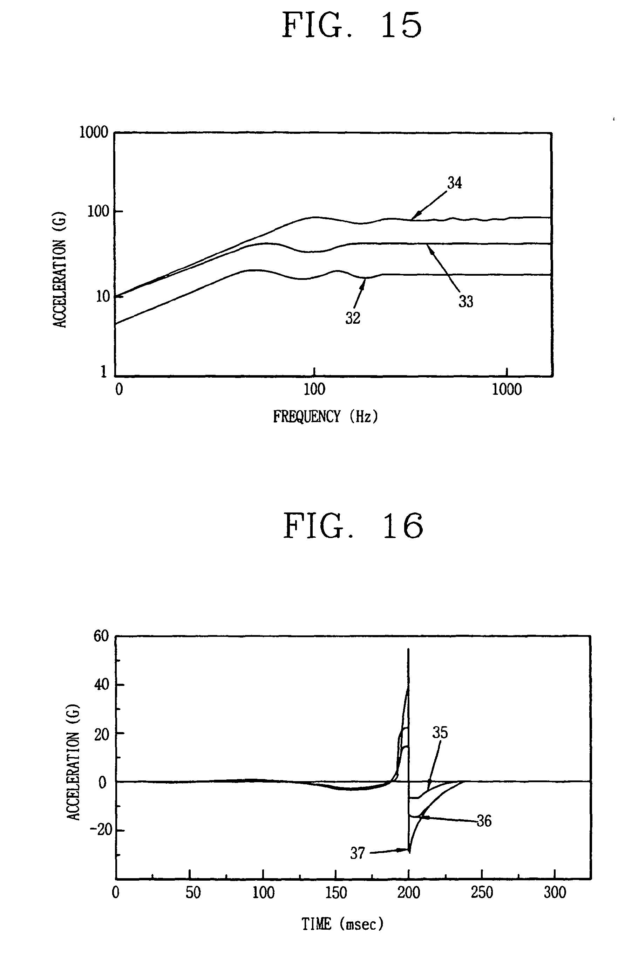

In the classical shock test, sawtooth waveforms of Figure 14 are used for the functional test for flight equipment, the functional test for ground equipment, the crash hazard test for flight equipment and the crash hazard test for ground equipment. The shock response spectra of the sawtooth waveforms are shown in Figure 15.

Figure 14 shows ideal sawtooth waveforms for the functional test for flight equipment, the functional test for ground equipment, the crash hazard test for flight equipment and the crash hazard test for ground equipment.

Figure 15 shows the shock response spectra of the sawtooth waveforms of Figure 14. Here, the numerals 7 and 32 are related to the functional test for flight equipment, the numerals 8 and 33 are related to the functional test for ground equipment and the crash hazard test for flight equipment, and the numerals 9 and 34 are related to the crash hazard test for ground equipment.

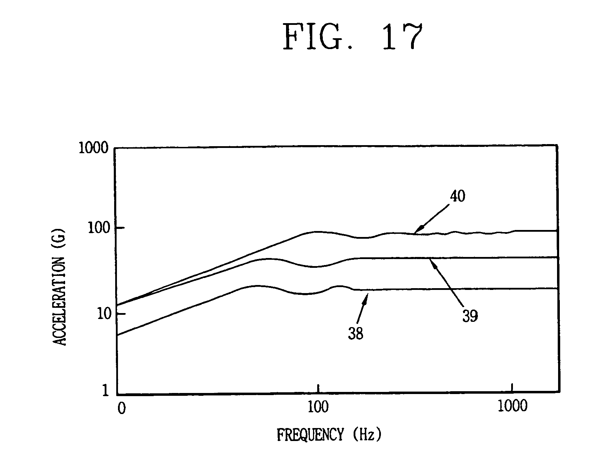

In order to use the shock response spectra of Figure 15 for the shock test, waveforms synthesized according to the present invention are shown in Figure 16, and the shock response spectra of the synthesized waveforms are shown in Figure 17. Here, the numerals 35 and 38 are related to the functional test for flight equipment, the numerals 36 and 39 are related to the functional test for ground equipment and the crash hazard test for flight equipment, and the numerals 37 and 40 are related to the crash hazard test for ground equipment.

Therefore, as can be seen from Figures 15 and 17, the shock waveforms synthesized according to the present invention can be used for the shock test, instead of using the sawtooth waveforms which have pre-load and post-load with respect to the test specifications for the sawtooth waveforms for the classical shock test. Furthermore, the waveforms are synthesized by using wavelets of which frequency is 20 ~ 2,000Hz, and the shock response spectrum with respect to the natural frequency of 20 ~ 2,000Hz is analyzed. As a result, peak velocities and peak displacements can be further reduced, and accordingly it can be advantageous to solve a problem in that the test is impossible to be performed, provided that the peak velocities and the peak displacements exceed shaker limits.

As described above, by increasing the interference between parts within the test item, the shock test can be sufficiently performed with respect to the damage or malfunction which may be caused by the interference, and the shock response history required for the synthesis of the shock waveforms can be obtained according to the present invention. Also, the unwanted transient can be filtered off, and the peak velocities and the peak displacements in the classical shock test of the sawtooth or half-sine can be easily reduced.

As the present invention may be embodied in several forms, it should also be understood that the above-described embodiments are not limited by any of the details of the foregoing description, unless otherwise specified, but rather should be construed broadly within the scope of the appended claims, and therefore all changes and modifications that fall within the metes and bounds of the claims, or equivalence of such metes and bounds are therefore intended to be embraced by the appended claims.

**Claims**

1. A method of conducting a shock response spectrum test on a piece of equipment, the method comprising:

    a) establishing a plurality of wavelets, each wavelet having a wavelet frequency and having a delay time;
    b) synthesizing the plurality of wavelets to form a shock waveform;
    c) conducting the shock response spectrum test on the piece of equipment using the shock waveform; and
    d) wherein each wavelet delay time $\delta_k$ is established as $\delta_k = \tau_1 - \tau_k$ ($k = 1, 2, \cdots, M$), wherein each time $\tau_k$ is determined by:

        i) determining a transfer function for a single degree of freedom SDOF system, wherein the SDOF system has a quality factor of 10, and wherein a natural frequency of the SDOF system is equal to the wavelet frequency;
        ii) determining a shock response history for the SDOF system due to a zero delay wavelet input having the wavelet frequency; and
        iii) obtaining the time $\tau_k$ at which a maximax value is detected in the shock response history.

2. A method according to claim 1 wherein establishing the plurality of wavelets further comprises:

    establishing a number of half cycles for each wavelet.

3. A method according to claim 1 or claim 2 wherein establishing the plurality of wavelets further comprises:

    establishing an acceleration amplitude for each wavelet.

4. A method according to claim 2 or claim 3 wherein the number of half cycles for a wavelet is 5 when the wavelet frequency is under 1,000 Hz; otherwise, the number of half cycles is 7.

5. A method according to claim 3 or claim 4 wherein the acceleration amplitude for each wavelet is established by specifying a time limit and obtaining a maximax value within the time limit.

6. A method according to any of the preceding claims wherein the shock response spectrum test is a sawtooth shock test, and wherein the shock test specifies a natural frequency range for the shock test, wherein the plurality of wavelets have wavelet frequencies in the specified natural frequency range for the shock test.

7. A method according to claim 6 wherein the specified natural frequency range is from 10 Hz to 2,000 Hz.

**Patentansprüche**

1. Verfahren zum Durchführen einer Stoß-Ansprechspektrumprüfung an einem Ausrüstungsstück, mit folgenden Schritten:

    a) Herstellen einer Mehrzahl von Wavelets, wobei jede Wavelet eine Waveletfrequenz und eine Verzögerungszeit aufweist;
    b) Synthetisieren der Mehrzahl von Wavelets zum Bilden einer Stoßwellenform;
    c) Durchführen der Stoß-Ansprechspektrumprüfung an dem Ausrüstungsstück unter Verwendung der Stoßwellenform; und
    d) wobei jede Wavelet-Verzögerungszeit $\delta_k$ als $\delta_k = \tau_1$ ($k = 1, 2, \cdots, M$) festgelegt wird, wobei jede Zeit $\tau_k$ bestimmt wird durch:

i) Bestimmen einer Übertragungsfunktion für ein SDOF-System (Single Degree of Freedom - ein Freiheitsgrad), wobei das SDOF-System einen Gütefaktor von 10 aufweist und wobei eine Eigenfrequenz des SDOF-Systems gleich der Wavelet-Frequenz ist;

ii) Bestimmen einer Stoß-Ansprechgeschichte für das SDOF-System aufgrund einer Wavelet-Eingabe mit Verzögerung null mit der Wavelet-Frequenz; und

iii) Erhalten der Zeit $\tau_k$, zu der ein Höchstwert in der Stoß-Ansprechgeschichte erkannt wird.

2. Verfahren nach Anspruch 1, wobei Herstellen der Mehrzahl von Wavelets weiterhin folgendes umfaßt:

Herstellen einer Anzahl von Halbzyklen für jedes Wavelet.

3. Verfahren nach Anspruch 1 oder Anspruch 2, wobei Herstellen der Mehrzahl von Wavelets weiterhin folgendes umfaßt:

Festlegen einer Beschleunigungsamplitude für jedes Wavelet.

4. Verfahren nach Anspruch 2 oder Anspruch 3, wobei die Anzahl von Halbzyklen für ein Wavelet 5 beträgt, wenn die Wavelet-Frequenz unter 1000 Hz liegt; ansonsten beträgt die Anzahl von Halbzyklen 7.

5. Verfahren nach Anspruch 3 oder Anspruch 4, wobei die Beschleunigungsamplitude für jedes Wavelet durch Angeben einer Zeitgrenze und Erhalten eines Höchstwertes innerhalb der Zeitgrenze festgelegt wird.

6. Verfahren nach einem der vorhergehenden Ansprüche, wobei die Stoß-Ansprechspektrumprüfung eine Sägezahn-Stoßprüfung ist und wobei die Stoßprüfung einen Eigenfrequenzbereich für die Stoßprüfung angibt, wobei die Mehrzahl von Wavelets Wavelet-Frequenzen in dem angegebenen Eigenfrequenzbereich für die Stoßprüfung aufweisen.

7. Verfahren nach Anspruch 6, wobei der angegebene Eigenfrequenzbereich von 10 Hz bis 2000 Hz reicht.

## Revendications

1. Procédé de conduite d'un test de spectre de réponse à un choc sur un élément d'équipement, le procédé comprenant :

a) l'établissement d'une pluralité d'ondelettes, chaque ondelette présentant une certaine fréquence d'ondelette et présentant une certaine durée de retard,

b) la synthèse de la pluralité d'ondelettes afin de façonner une forme d'onde de choc,

c) la conduite du test de spectre de réponse au choc sur l'élément d'équipement en utilisant la forme d'onde de choc, et

d) le fait que chaque durée de retard d'ondelette $\delta_k$ est établie comme étant $\delta_k = \tau_1 - \tau_k$ (k = 1, 2 , ... , M) , chaque durée $\tau_k$ étant déterminée grâce à :

i) la détermination d'une fonction de transfert pour un système de degré unique de liberté (SDOF), le système SDOF présentant un facteur de qualité de 10, et la fréquence propre du système SDOF étant égale à la fréquence d'ondelette,

ii) la détermination d'un historique de réponses à des chocs pour le système SDOF dû à une entrée d'ondelette à retard nul présentant la fréquence d'ondelette, et

iii) l'obtention de la durée $\tau_k$ à laquelle une valeur maximale est détectée dans l'historique de réponses aux chocs.

2. Procédé selon la revendication 1, dans lequel l'établissement de la pluralité d'ondelettes comprend en outre :

l'établissement d'un certain nombre de demi-cycles pour chaque ondelette.

3. Procédé selon la revendication 1 ou la revendication 2, dans lequel l'établissement de la pluralité d'ondelettes comprend en outre :

l'établissement d'une amplitude d'accélération pour chaque ondelette.

**4.** Procédé selon la revendication 2 ou la revendication 3, dans lequel le nombre de demi-cycles pour une ondelette est 5 lorsque la fréquence d'ondelette se trouve en dessous de 1000 Hz, ou sinon dans lequel le nombre de demi-cycles est 7.

**5.** Procédé selon la revendication 3 ou la revendication 4, dans lequel l'amplitude d'accélération pour chaque ondelette est établie en spécifiant une limite de durée et en obtenant une valeur maximale à l'intérieur de la limite de durée.

**6.** Procédé selon l'une quelconque des revendications précédentes, dans lequel le test de spectre de réponse à un choc est un test à un choc de type dents de scie, et dans lequel le test au choc spécifie une plage de fréquences propres pour le test au choc, la pluralité d'ondelettes y présentant des fréquences d'ondelettes dans la plage de fréquences propres spécifiée pour le test au choc.

**7.** Procédé selon la revendication 6, dans lequel la plage de fréquences propres spécifiée est de 10 Hz à 2000 Hz.

# FIG. 1

# FIG. 2

# FIG. 3

# FIG. 4

# FIG. 5

# FIG. 6

# FIG. 7

# FIG. 8

# FIG. 9

# FIG. 10

# FIG. 11

# FIG. 12

# FIG. 13

# FIG. 14

# FIG. 15

# FIG. 16

# FIG. 17

**EP 1 657 546 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 3733555 A